# EUROPÄISCHE PATENTSCHRIFT

(11) **EP 3 092 419 B1**
(45) Veröffentlichungstag und Bekanntmachung des Hinweises auf die Patenterteilung: **03.01.2018**
(21) Anmeldenummer: 15700948.1
(22) Anmeldetag: 08.01.2015
(51) Int. Cl.: F16F 9/34, B60G 15/12, B60G 15/06, B60G 11/62, B60G 11/27, F16F 9/04

(54) **VENTILEINRICHTUNG FÜR EIN LUFTFEDERBEIN**
VALVE FOR AN AIR SPRING DAMPER
VALVE POUR COUSSIN AMORTISSEUR

(30) Priorität: 09.01.2014 DE 102014100166
(43) Veröffentlichungstag der Anmeldung: 16.11.2016
(73) Patentinhaber: ThyssenKrupp Bilstein GmbH, 58256 Ennepetal (DE)
(72) Erfinder: KREFELD, Andreas, 40593 Düsseldorf (DE); MRUGALLA, Damian, Cincinnati , OH 45202 (US)
(74) Vertreter: thyssenkrupp Intellectual Property GmbH
(86) Internationale Anmeldenummer: PCT/EP2015/000017
(87) Internationale Veröffentlichungsnummer: WO 2015/104215

(56) Entgegenhaltungen:
- WO-A1-2013/050385
- DE-A1-102012 200 389
- US-A- 4 934 667

## Beschreibung

Die vorliegende Erfindung betrifft eine Ventileinrichtung für ein Luftfederbein eines Luftfederungssystems eines Kraftfahrzeugs, mit einer Ventileinheit und einem die Ventileinheit aufnehmenden Gehäuse, das eine Lagerfläche zur Lagerung eines Kopflagers des Luftfederbeins an der Ventileinrichtung aufweist, wobei das Gehäuse einen Oberflächenabschnitt zur formschlüssigen Abstützung der Ventileinrichtung im Luftfederbein aufweist, so dass eine vom Kopflager auf die Ventileinrichtung ausgeübte Kraft über das Gehäuse in das Luftfederbein einleitbar ist. Insbesondere betrifft die Erfindung eine Ventileinrichtung gemäß dem Oberbegriff des Anspruchs 1 sowie ein Luftfederbein mit einer solchen Ventileinrichtung.

### STAND DER TECHNIK

Bei Luftfederungssystemen für Kraftfahrzeuge besteht bei einigen Anwendungen das Ziel, die Eigenschaften des Luftfederungssystems auf möglichst einfache Weise einstellen zu können. Ein Luftfederungssystem weist ein Luftfederbein mit einer Vielzahl von unterschiedlichen Komponenten auf, welche sich auf die Eigenschaften des Luftfederungssystems auswirken, z.B. die Größe oder das Material eines Luftfedertopfes bzw. eines Rollbalgs, welcher beim Einfedern und beim Ausfedern an einem Abrollrohr abrollt, oder die Ausführung eines Ventils, insbesondere eines Druckhalteventils zur Druckbestimmung in einem Druckraum des Luftfederbeins, der im Luftfedertopf gebildet ist und der vom Rollbalg beweglich begrenzt ist. Über das Ventil kann dabei einen Zustrom oder Abstrom von Luft in oder aus dem Druckraum geregelt werden. Die Eigenschaften des Luftfedersystems können dabei auch durch ein im Luftfederbein angeordnetes Kopflager eingestellt werden, insbesondere durch eine auf das Kopflager ausgeübte mechanische Vorspannung. Eine solche Vorspannung lässt sich mittels der Anordnung der Ventileinrichtung im Luftfederbein in Anlage zum Kopflager einstellen. Die Ventileinrichtung kann z.B. am Kopflager unter Vorspannung zur Anlage gebracht sein, um eine Kraft in axialer Richtung, also in Richtung einer Mittenlängsachse des Luftfederbeins bzw. Kopflagers, auf das Kopflager auszuüben. Dabei kann ein Vordruck auf einen elastischen Teil des Kopflagers ausgeübt werden, indem eine Unterseite eines Gehäuses der Ventileinrichtung auf dem elastischen Teil zur Anlage gebracht wird. Die Ventileinrichtung sitzt dabei oberhalb des Kopflagers im Luftfederbein ein und umfasst eine in einem Gehäuse aufgenommene Ventileinheit, über die der Druck in einem Druckraum des Luftfederbeins gehalten werden kann, wobei das Gehäuse mit dem Kopflager in Kontakt steht.

Bekannte Gehäuse sind dabei z.B. aus einem für große Flächenpressungen ausgelegten Material ausgebildet, z.B. gebildet als metallisches Grussteil, insbesondere aus Aluminium.

Die Patentschrift US 4 934 667 beschreibt ein Kopflager eines Kraftfahrzeugfederbeins. Die Patentschrift DE 198 54 540 C2 beschreibt ein Druckhalteventil für Luftfederungssysteme, bei welchem in einem Gehäuse ein Ventilglied in Form einer Membran angeordnet ist.

Die Offenlegungsschrift DE 102 25 354 A1 beschreibt ein Kopflager eines Kraftfahrzeugfederbeins.

### OFFENBARUNG DER ERFINDUNG

Es ist die Aufgabe der vorliegenden Erfindung, eine Ventileinrichtung zu schaffen, welche auf flexible Weise in einem Federbein eingesetzt werden kann. Insbesondere ist es eine Aufgabe, eine Ventileinrichtung bereitzustellen, über die eine auf ein Kopflager eines Luftfederbeins auszuübende Vorspannung einstellbar ist, und welche sich bevorzugt auch kostengünstig herstellen lässt. Dabei soll auch die Aufgabe gelöst werden, ein standardisiertes Gehäuse der Ventileinrichtung mit gleicher Ausgestaltung für Luftfederbeine unterschiedlicher Spezifikationen verwenden zu können.
Diese Aufgabe wird ausgehend von einer Ventileinrichtung gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass an dem Oberflächenabschnitt des Gehäuses ein Abstützabschnitt ausgebildet ist, an den ein vom Gehäuse trennbares Austauschelement aus der Richtung einer Mittenlängsachse der Ventileinrichtung zur formschlüssigen Abstützung am Gehäuse anordbar ist, wobei das Gehäuse zumindest im Bereich des Oberflächenabschnitts aus Kunststoff ausgeführt ist.

Ein Kunststoffgehäuse bzw. ein zumindest teilweise aus Kunststoff hergestelltes Gehäuse der Ventileinrichtung kann kostengünstig ausgeführt werden. Es können einfache Herstellungsverfahren gewählt werden, insbesondere in Hinblick auf große Stückzahlen und kurze Herstellungszeiten. Im Gegensatz zu z.B. Aluminium-Druckguss-Gehäusen kann ein Kunststoffgehäuse auf einfachere, kostengünstigere Weise hergestellt werden, z.B. durch Kunststoff - Spritzgussverfahren.

Mit Vorteil muss die Ventileinrichtung nicht auf die Einbaugeometrie im Luftfederbein angepasst sein und es kann eine standardisierte Ventileinrichtung für verschiedene Luftfederbeine Verwendung finden, da das Austauschelement erfindungsgemäß ein anpassbares Kleinteil bildet, das eine immer gleiche Schnittstellengeometrie zur Ventileinrichtung aufweist und weiterhin, unabhängig von der Schnittstellengeometrie, an die Einbausituation im Luftfederbein geometrisch angepasst werden kann.

Vorteilhaft ist damit, dass auch die Art der Abstützung des Kopflagers im Luftfederbein nicht geändert werden muss, wenn eine standardisierte Ventileinrichtung in Luftfederbeine mit verschiedenen Spezifikationen einbaubar sein soll. Die unterschiedlichen Spezifikationen können bei ansonsten gleicher Ventileinrichtung und gleichem Luftfederbein z.B. damit erreicht werden, dass Austauschelemente mit unterschiedlichen geometrischen Abmessungen verwendet werden. So kann beispielsweise das Kopflager bei verschieden dicken Austauschelementen unterschiedlich stark vorgespannt werden, und das Austauschelement kann an der Schnittstelle zum Luftfederbein dieselbe Oberflächenkontur aufweisen wie z.B. vorbekannte Gehäuse, welche direkt, also ohne dazwischen gelagertem Austauschelement, am Luftfederbein abgestützt sind. Dabei ist die Materialwahl beim Austauschelement weitgehend frei. Das Austauschelement kann z.B. aus einem besonders formbeständigen, druckbeständigen und/oder harten Material, insbesondere einem Metall wie Stahl oder Aluminium, ausgeführt sein.

Das Gehäuse kann einen massiven Grundkörper aufweisen, in welchem eine Ventileinheit mit Funktionselementen für Pneumatikfunktionen integriert ist. Als eine Ventileinheit ist dabei bevorzugt eine Kernkomponente innerhalb des Gehäuses der Ventileinrichtung aus Kunststoff zu verstehen, mittels welcher ein Zustrom oder Abstrom von Gas zwischen der Umgebung und dem Luftfederbein geregelt werden kann, sei es auf elektronische oder z.B. mechanische Weise.

Als ein Austauschelement ist vorliegend eine einzelne Komponente zu verstehen, die ein separates Teil bildet, das unabhängig vom Gehäuse gehandhabt und hergestellt werden kann, insbesondere aus einem anderen Werkstoff als das Gehäuse. Das Austauschelement kann z.B. als eine Scheibe, als ein Ring oder als Platte ausgebildet sein und weist bevorzugt eine große Kontaktfläche auf, mittels welcher es am Gehäuse zur Anlage gebracht werden kann. Bevorzugt weist das Material des Austauschelementes eine höhere Druckfestigkeit und/oder eine größere Härte auf als das Material des Gehäuses.

Weiterhin bevorzugt weist der Abstützabschnitt einen Absatz auf oder bildet einen Absatz, welcher eine Position des Austauschelements relativ zum Gehäuse definiert, und dieses insbesondere in radialer Richtung zentriert. Hierdurch kann das Austauschelement auf einfache, vordefinierte Weise in einer definierten Position mit dem Gehäuse gekoppelt werden. Weiterhin bevorzugt ist an einer Innenseite des Absatzes eine Zentrierung vorgesehen, wobei die Zentrierung mit einer Innenmantelfläche des Austauschelements korrespondiert. Weiterhin bevorzugt ist der Absatz durch eine Ausnehmung an einem Außenumfang des Gehäuses gebildet.

Mit Vorteil ist am Gehäuse eine Aufnahme zur Anordnung eines Dichtelements zum gasdichten Abdichten einer Schnittstelle zwischen der Ventileinrichtung und dem Luftfederbein, insbesondere einer Innenmantelfläche eines Luftfedertopfes des Luftfederbeins, angeordnet. Das Dichtelement kann bewirken, dass ein Gasaustausch mit dem Druckraum ausschließlich über die Ventileinheit in der Ventileinrichtung erfolgt. Bevorzugt ist dabei das Dichtelement zwischen der Lagerfläche und dem Austauschelement angeordnet.

Gemäß einem vorteilhaften Ausführungsbeispiel weist das Gehäuse eine Mehrzahl von Rippen auf, welche aus Kunststoff ausgeführt sind, und welche sich bevorzugt in radialer Richtung zwischen der Mittenlängsachse und dem Abstützabschnitt erstrecken. Hierdurch kann ein steifes Gehäuse bei geringem Materialverbrauch bereitgestellt werden. Die Rippen können dabei bevorzugt gleichverteilt um die Mittenlängsachse angeordnet sein, wodurch eine symmetrische Kraftverteilung im Gehäuse sichergestellt werden kann.

Weiterhin bevorzugt ist der Absatz an den Rippen bzw. Stegen ausgebildet, welche sich radial nach außen erstrecken, wobei die Rippen bevorzugt eine in Bezug auf die Mittenlängsachse schräg angeordnete Oberseite aufweisen. Hierdurch kann das Austauschelement auf einfache Weise mit dem Abstützabschnitt gekuppelt werden, insbesondere indem die Oberseiten der Rippen das Austauschelement beim Aufstecken auf den Absatz in die radial ausgerichtete Position leiten.

Gemäß einem vorteilhaften Ausführungsbeispiel ist der Abstützabschnitt in einem radial äußeren Randbereich des Gehäuses angeordnet, bevorzugt angrenzend an eine Außenmantelfläche des Gehäuses. Hierdurch ist das Austauschelement derart am Gehäuse anordbar, dass die Kraft in axialer Richtung in einem radial äußeren Randbereich des Gehäuses auf das Luftfederbein übertragbar ist. Dies ermöglicht beispielsweise, den bisherigen Aufbau der für die Ventileinrichtung vorgesehenen Aufnahme im Luftfederbein beizubehalten.

Gemäß einem vorteilhaften Ausführungsbeispiel ist das Austauschelement an einer Oberseite des Gehäuses gegenüberliegend von der Lagerfläche angeordnet. Diese Anordnung kann vom Kopflager aus gesehen auch als eine Reihenanordnung beschrieben werden. Hierdurch kann das Austauschelement auf einfache Weise im Kraftflusspfad zwischen dem Gehäuse und der Aufnahme im Luftfederbein angeordnet werden.

Gemäß einem vorteilhaften Ausführungsbeispiel weist die Ventileinrichtung das Austauschelement auf, wobei der Abstützabschnitt bevorzugt derart an einer Oberseite der Ventileinrichtung angeordnet ist, dass das Austauschelement in axialer Richtung auf die Ventileinrichtung aufsteckbar bzw. aufsetzbar ist.

Gemäß einem vorteilhaften Ausführungsbeispiel weist das Austauschelement eine mit dem Abstützabschnitt korrespondierende bevorzugt ringförmige Auflagefläche auf und ist ringförmig. Hierdurch kann eine symmetrische Einleitung der Abstützkraft in das Luftfederbein erfolgen, und die Abstützkraft kann bei einer ring- oder scheibenförmigen Auflagefläche über eine vergleichsweise große Fläche verteilt werden, so dass nur eine kleine Flächenpressung am Gehäuse hervorgerufen wird.

Bevorzugt ist die Auflagefläche zumindest annähernd orthogonal zur Mittenlängsachse der Ventileinrichtung ausgerichtet, so dass Abstützkräfte zumindest im Wesentlichen in axialer Richtung übertragbar sind. Als "zumindest annähernd" bzw. "im Wesentlichen" ist dabei bevorzugt eine Ausrichtung zu verstehen, bei welcher der Winkel zur Mittenlängsachse im Bereich von 75 bis 105°, weiter bevorzugt 85 bis 95° liegt.

Gemäß einem vorteilhaften Ausführungsbeispiel weist das Austauschelement eine bevorzugt konkav ausgebildete Gegenlagerfläche auf, über die das Austauschelement im Luftfederbein formschlüssig abstützbar ist, wobei die Gegenlagerfläche in einem vordefinierten Axialabstand von der Auflagefläche ausgebildet ist, und wobei die Gegenlagerfläche bevorzugt im Übergang in eine Außenmantelfläche des Austauschelements angeordnet ist und damit den Kantenbereich bildet. Hierdurch kann eine Abstützung an einem Abstützelement, beispielsweise in Form eines Drahtrings erfolgen.

Mit anderen Worten ist die Ventileinrichtung unter einer über das Austauschelement weitergeleiteten Vorspannung in Abhängigkeit der Dicke des Austauschelements bzw. dem axialen Abstand zwischen der Auflagefläche und der Gegenlagerfläche des Austauschelements vorgespannt über das Abstützelement in einer Aufnahme am Luftfederbein zwischen dem Abstützelement und dem Kopflager gelagert, wobei die Aufnahme so ausgebildet ist, dass unterschiedliche geometrische Ausgestaltungen des Austauschelements in der Aufnahme aufnehmbar sind.

An der Gegenlagerfläche kann ein Abstützelement, insbesondere ein Abstützring, z.B. ein Drahtring, zur Anlage gebracht werden, der zur Montage und zur Demontage leicht ein- und ausgebaut werden kann. Mit anderen Worten kann die Gegenlagerfläche an einem ortsfest am Luftfederbein angeordneten Abstützelement zur Anlage gebracht werden. Das Abstützelement kann die vom Kopflager auf die Ventileinrichtung ausgeübten Kräfte aufnehmen und ins Luftfederbein weiterleiten, insbesondere über einen oder mehrere Vorsprünge, die am Luftfedertopf des Luftfederbeins ausgebildet sind und z.B. radial nach innen überstehen.

Als Gegenlagerfläche ist dabei ein Lager bzw. eine Fläche zu verstehen, welche eingerichtet ist, die vom Kopflager auf das Gehäuse ausgeübten Abstützkräfte ins Luftfederbein weiterzuleiten und auch bei vergleichsweise großen Flächenpressungskräften auf das Luftfederbein zu übertragen.

Bevorzugt ist zwischen einer Außenmantelfläche des Austauschelementes und der Gegenlagerfläche eine Kante gebildet, an welcher das in einer für die Ventileinrichtung vorgesehenen Aufnahme des Luftfederbeins angeordnetes Abstützelement zur Anlage gebracht werden kann. Weiter bevorzugt ist die Gegenlagerfläche im Bereich der Kante bzw. angrenzend zur Außenmantelfläche in einem Winkel von zumindest annähernd 90° zur Außenmantelfläche angeordnet. Hierdurch kann eine Art Vorsprung oder Absatz gebildet werden, mittels welchem das Austauschelement relativ zum Abstützelement gut verankert werden kann.

Bevorzugt weist das Austauschelement eine vordefinierte Dicke in Bezug auf die axiale Richtung auf, wobei die Dicke durch den Abstand zwischen der Auflagefläche und der Stirnseite bzw. einer Gegenlagerfläche definiert ist.

Hierdurch kann eine auf das Kopflager ausgeübte Vorspannung auf einfache und exakte Weise auch bei einer unveränderten Gehäusegeometrie der Ventileinrichtung eingestellt werden. Bevorzugt ist die Stirnseite zumindest abschnittsweise annähernd parallel zur Auflagefläche ausgerichtet. Weiter bevorzugt ist die absolute Dicke des Austauschelements durch den axialen Abstand der Stirnseite bzw. einen Abschnitt der Stirnseite von der Auflagefläche definiert.

Gemäß einem vorteilhaften Ausführungsbeispiel ist der Abstützabschnitt flächenmäßig größer als die Gegenlagerfläche. Hierdurch kann dieselbe Abstützkraft mit einer geringeren Flächenpressung zwischen dem Gehäuse und dem Austauschelement als zwischen dem Austauschelement und dem Abstützelement übertragen werden, so dass das Gehäuse auch aus einem im Vergleich zum Austauschelement weicheren und/oder weniger flächendruckbeständigen Kunststoff, der z.B. besonders kostengünstig ist, ausgeführt werden kann.

Die Aufgabe wird auch durch eine Ventilanordnung mit einer erfindungsgemäßen Ventileinrichtung gelöst, wobei die Ventilanordnung ein Abstützelement aufweist, welches eingerichtet ist, das Kopflager in der axialen Richtung an einem Luftfedertopf des Luftfederbeins auf vordefinierte Weise mittels des Austauschelements, insbesondere als Funktion der Dicke mit einer Erstreckung in axialer Richtung des Austauschelements, zu sichern.

Über den Betrag der Vorspannung kann z.B. das Fahrverhalten des Kraftfahrzeugs eingestellt werden. Dank unterschiedlicher Austauschelemente, d.h. Austauschelemente, die weitgehend identisch ausgeführt sind, jedoch jeweils eine spezifische Dicke aufweisen, kann die Vorspannung auf besonders einfache Weise eingestellt werden. Es kann ein adäquates Austauschelement für eine gewünschte Vorspannung gewählt werden, ohne dass weitere Änderungen am Aufbau bzw. der Anordnung der Komponenten zueinander erforderlich sind. Hierzu sind erfindungsgemäß nur drei Komponenten erforderlich, nämlich das Gehäuse der Ventileinrichtung, das Austauschelement sowie das Abstützelement.

Die Aufgabe wird auch durch ein Luftfederbein mit einer erfindungsgemäßen Ventileinrichtung und mit dem Austauschelement sowie mit einem Kopflager gelöst, wobei das Luftfederbein ein Abstützelement aufweist, an welchem die formschlüssige Abstützung sichergestellt ist und wobei das Austauschelement eine Kopplung zwischen dem Abstützelement und dem Oberflächenabschnitt des Gehäuses bildet.

Gemäß einem vorteilhaften Ausführungsbeispiel weist das Luftfederbein einen Luftfedertopf mit einer Ausbauchung und einem Vorsprung auf, wobei ein Abstützelement des Luftfederbeins zwischen der Ausbauchung und dem Vorsprung angeordnet ist, und wobei das Austauschelement am Abstützelement in axialer Richtung gelagert bzw. abgestützt ist. Hierdurch kann eine einfach aufgebaute Aufnahme für das Abstützelement bzw. die Ventileinrichtung bereitgestellt werden, an welcher das Abstützelement bzw. das Austauschelement und die Ventileinrichtung formschlüssig gelagert werden können.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Bei in einzelnen Figuren nicht explizit beschriebenen Bezugsziffern wird auf die anderen Figuren verwiesen. Es zeigt:
- Figur 1: eine schematische Schnittansicht einer Ventileinrichtung gemäß einem Ausführungsbeispiel der Erfindung mit einem daran angeordneten Austauschelement sowie zwei weiteren dargestellten, wahlweise alternativ verwendbaren Austauschelementen;
- Figur 2: eine Schnittansicht eines Austauschelements, welches eingerichtet ist, an der in der Figur 1 gezeigten Ventileinrichtung angeordnet zu sein;
- Figur 3: eine perspektivische Seitenansicht einer Ventileinrichtung gemäß dem in der Figur 1 gezeigten Ausführungsbeispiel und
- Figur 4: eine schematische Schnittansicht eines Luftfederbeins eines Kraftfahrzeugs mit einer daran angeordneten Ventilanordnung gemäß einem Ausführungsbeispiel der Erfindung.

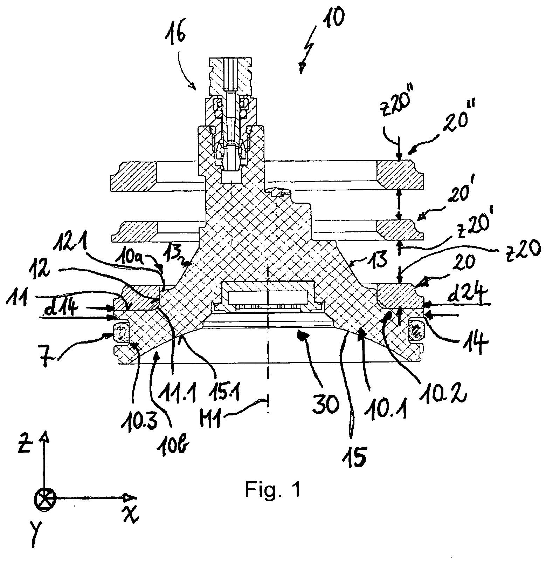

Figur 1 zeigt eine Ventileinrichtung 10 mit einem Gehäuse 10.1, an welchem eine Aufnahme 10.3, insbesondere eine umlaufende Nut, für ein Dichtelement 7, insbesondere einen Dichtring, ausgebildet ist. Das Gehäuse 10.1 umgrenzt eine Ventileinheit 30. Am Gehäuse 10.1 ist an einer Oberseite 10a des Gehäuses 10.1 1 ein Oberflächenabschnitt bzw. Absatz 10.2 ausgebildet, an welchem ein Austauschelement 20 angeordnet ist. Der Absatz 10.2 ist umlaufend an einer Außenmantelfläche 14 des Gehäuses 10.1 angeordnet, insbesondere konzentrisch um eine Mittenlängsachse M1 der Ventileinrichtung 10.

Der Absatz 10.2 weist einen zumindest annähernd orthogonal zur Mittenlängsachse M1, d.h., in x-Richtung, angeordneten Abstützabschnitt 11 auf, insbesondere in Form einer ringförmigen Fläche. Der Abstützabschnitt 11 ist zumindest annähernd orthogonal zu einer bevorzugt umlaufenden Zentrierung 12 angeordnet, und dazwischen ist eine Fase bzw. ein Innenradius 11.1 ausgebildet. Die Zentrierung 12 grenzt an einzelne Stege bzw. Rippen 13 des Gehäuses 10.1 an, und dazwischen ist eine Fase bzw. ein Außenradius 12.1 ausgebildet.

Das Austauschelement 20 kann an der Zentrierung 12 zentriert werden und am Abstützabschnitt 11 in axialer Richtung in einer vordefinierten Axialposition ortsfest relativ zum Gehäuse 10.1 positioniert werden. Eine Außenmantelfläche des Austauschelements 20 kann dabei bündig mit der Außenmantelfläche 14 angeordnet werden. Mit anderen Worten: die Außenmantelfläche 14 weist einen Durchmesser d14 auf, welcher zumindest annähernd dem Durchmesser d24 der Außenmantelfläche des Austauschelements 20 entspricht, und bevorzugt gleich groß ist.

Das Austauschelement 20 weist eine Dicke z20 auf, welche durch einen maximalen Abstand zwischen den beiden Stirnseiten des Austauschelements definiert ist.

In der Figur 1 sind zwei weitere Austauschelemente 20', 20" dargestellt, die jeweils eine bestimmte Dicke z20', z22' in der axialen Richtung der Mittenlängsachse M1 aufweisen. Die drei Austauschelemente 20, 20', 20" weisen alle eine unterschiedliche Dicke auf. Die Ventileinrichtung kann mit einem dieser Austauschelemente gekuppelt werden, je nach Anwendungsfall.

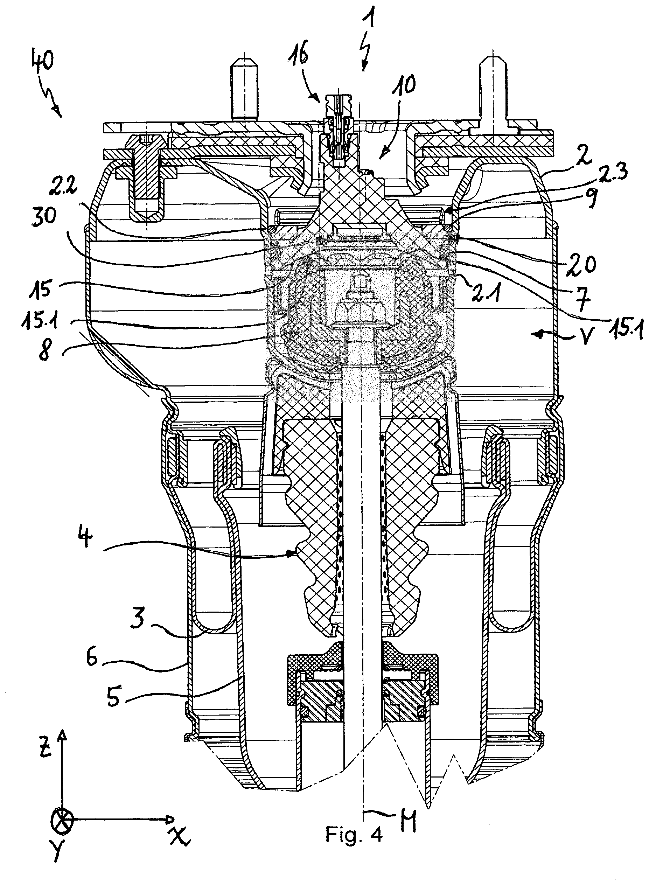

Die Ventileinrichtung 10 weist ferner an einer Unterseite 10b eine stirnseitige Lagerfläche 15 auf, mittels welcher die Ventileinrichtung 10 auf einem Kopflager eines Luftfederbeins gelagert werden kann, wie im Zusammenhang mit der Fig. 4 näher beschrieben. Die stirnseitige Lagerfläche 15 ist in z-Richtung gesehen konkav nach innen gewölbt. Ein Flächenabschnitt 15.1 der Lagerfläche 15 liegt in einem montierten Zustand auf dem Kopflager auf. Die Ventileinrichtung 10 weist ferner einen Einlass bzw. Auslass 16 auf, über den Gas ausgetauscht werden kann.

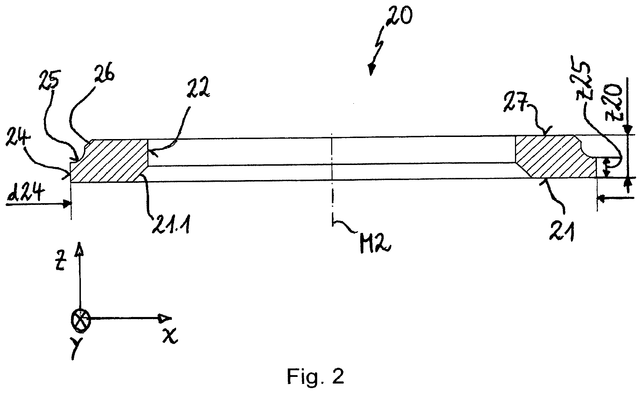

In der Figur 2 ist eines der in der Figur 1 angedeuteten Austauschelemente 20 im Detail gezeigt. Das Austauschelement 20 weist eine Auflagefläche 21 auf, welche bevorzugt zumindest annähernd orthogonal zu einer Mittenlängsachse M2 des Austauschelements 20 in x-Richtung ausgerichtet ist. Ferner weist das Austauschelement 20 eine Zentrierung bzw. Innenmantelfläche 22 auf, und zwischen der Zentrierung 22 und der Auflagefläche 21 ist ein Innenradius 21.1 bzw. eine Fase angeordnet. Gegenüberliegend von der Auflagefläche 21 ist eine Stirnseite bzw. Stirnfläche 27 ausgebildet, welche bevorzugt zumindest annähernd orthogonal zu einer Mittenlängsachse M2 des Austauschelements 20 in x-Richtung ausgerichtet ist, insbesondere parallel zur Auflagefläche 21. Der Abstand zwischen der Auflagefläche 21 und der Stirnseite 27 definiert eine Dicke z20 des Austauschelements 20. Das Austauschelement 20 weist eine Außenmantelfläche 24 auf, an welcher ein Gegenlager bzw. eine Gegenlagerfläche 25 ausgebildet ist. Die Gegenlagerfläche 25 ist konkav in x-Richtung in Richtung der Mittenlängsachse m² gekrümmt, insbesondere in Form eines Kreissegments.

Zwischen der Gegenlagerfläche 25 und der Stirnseite 27 ist ein Außenradius 26 bzw. eine Fase ausgebildet. Die Gegenlagerfläche 25 grenzt an die Außenmantelfläche 24 an, wobei eine Axialposition der Gegenlagerfläche in einem Abstand z25 zur Auflagefläche 21 angeordnet ist.

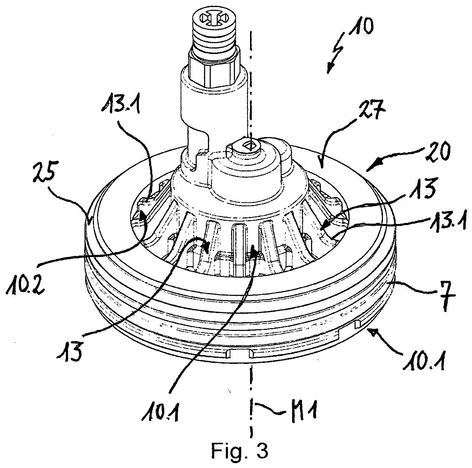

In der Figur 3 ist in einer perspektivischen Ansicht die Anordnung und Ausrichtung der Rippen 13 dargestellt. Die Rippen 13 weisen eine in Bezug auf die Mittenlängsachse M1 schräg nach außen geneigte Oberkante auf, welche jeweils zum Absatz 10.2 hin führen. Das Austauschelement 20 kann von oben auf das Gehäuse 10.1 gesteckt werden und dabei durch die Rippen 13 geführt werden und auf den Absatz 10.2 zu geführt werden. Am radial äußeren Ende flachen die Rippen 13 jeweils ab und weisen eine abschnittsweise zumindest annähernd horizontale Ausrichtung auf, nämlich in einem jeweiligen Endabschnitt 13.1. Die Stirnseite 27 überragt die Endabschnitte 13.1 in axialer Richtung. Hierdurch kann sichergestellt werden, dass ein insbesondere ringförmiges Element, welches oben auf der Stirnseite 27 am Austauschelement 20 angreift, nicht in Kontakt mit dem Gehäuse 10.1 gelangt.

In der Figur 4 ist eine Ventilanordnung 1 gezeigt, welche an einem Luftfederbein 40 angeordnet ist. Die Ventilanordnung 1 weist die Ventileinrichtung 10 mit der Ventileinheit 30 mit dem Austauschelement 20 auf, und ist mit dem Dichtelement 7 an einer Innenmantelfläche eines Luftfedertopfes 2 des Luftfederbeins 40 gelagert. Ferner weist das Luftfederbein 40 ein Kopflager 8 bzw. eine schwingungsdämpfende Komponente eines Kopflagers auf, welches Eigenschaften eines Dämpfers hat. Die Ventileinrichtung 10 kommt mit der stirnseitigen Lagerfläche 15 auf dem Kopflager 8 zur Anlage, insbesondere mit einem Kontaktflächenabschnitt 15.1, welcher je nach Form des Kopflagers z.B. ringförmig ist. Ferner weist das Luftfederbein 40 ein Abstützelement 9 auf, mittels welchem eine Vorspannung auf das Kopflager 8 ausgeübt werden kann, wobei die Vorspannung mittels der Ventileinrichtung 10 auf das Kopflager 8 übertragen wird, insbesondere in Form einer Axialkraft entgegen der z-Richtung.

Die Auflagefläche 21 des Austauschelements 20 kommt am Abstützabschnitt 11 des Gehäuses 10 in einem Bereich zur Anlage, welcher seitlich in radialer Richtung nach außen versetzt zum Kontaktflächenabschnitt 15.1 ist. Die Auflagefläche 21 sowie der Abstützabschnitt 11 sind ringförmig und weisen einen größeren Durchmesser auf als der Kontaktflächenabschnitt 15.1. Mit anderen Worten ist das Austauschelement 20 radial außen in Bezug auf den Kontaktflächenabschnitt 15.1 bzw. die damit korrespondierende Oberseite des Kopflagers 8 angeordnet. Hierdurch kann eine Kraftweiterleitung entlang von vorteilhaft ausgerichteten Kraftflusspfaden erfolgen, insbesondere in Verbindung mit der konkaven, nach innen gewölbten Geometrie der Lagerfläche. Auch erleichtert diese Anordnung den Austausch des Austauschelementes bzw. formschlüssige Verankerung des Austauschelements am Luftfederbein.

Der Luftfedertopf 2 und die Ventileinrichtung 10 sind konzentrisch um eine Mittenlängsachse M angeordnet. Der Luftfedertopf 2 definiert einen Druckraum V, welcher über einen Durchlass 2.1 bzw. eine Mehrzahl von Durchlässen in Verbindung mit der Ventileinheit 30 steht: Luft bzw. Gas kann zwischen dem Druckraum V und der Ventileinheit 30 ausgetauscht werden, bzw. ein Gasdruck kann vom Druckraum V auf die Ventileinheit 30 übertragen werden. Dabei weist das Kopflager 8 an dessen Oberseite eine Art Krone oder eine kronenartige Geometrie auf, mittels welcher sichergestellt ist, dass Luft zwischen einzelnen Domen der Krone vorbeiströmen kann. Über den Einlass bzw. Auslass 16 kann Gas zugeführt bzw. abgeführt werden, und in Verbindung mit der Ventileinheit 30 kann ein Gasdruck im Druckraum V eingestellt bzw. geregelt werden.

Unterhalb vom Kopflager 8 ist ein Druckanschlagpuffer 4 angeordnet. Das Luftfederbein 40 weist ferner einen Haltezylinder 6 auf, welcher einen Abrollkolben 5 umgrenzt. Der Haltezylinder 6 und der Abrollkolben 5 sind über einen Rollbalg 3 miteinander verbunden.

Am Austauschelement 20 ist das Abstützelement 9 angeordnet, welches sowohl an einer Gegenlagerfläche des Austauschelements 20 als auch an einer Ausbauchung 2.2 einer Innenmantelfläche des Luftfedertopfes 2 zur Anlage kommt. Das Abstützelement 9 kann z.B. als Drahtring ausgeführt sein. Das Luftfederbein 40 bzw. der Luftfedertopf 2 weist ferner einen Vorsprung 2.3 auf, an welchem das Abstützelement 9 in axialer Richtung zur Anlage kommen kann. Der Vorsprung 2.3 ist oberhalb von der Ausbauchung 2.2 angeordnet, und der Vorsprung 2.3 ragt bevorzugt zumindest annähernd um denselben Betrag radial nach innen, um welchen die Ausbauchung 2.2 die Innenmantelfläche radial nach außen aufweitet. Bevorzugt ragt der Vorsprung 2.3 um einen Betrag nach innen, welcher kleiner gleich ist als der Betrag, um welchen die Ausbauchung 2.2 nach außen ragt. Das Abstützelement 9 kann von oben am Vorsprung 2.3 vorbei unter den Vorsprung 2.3 gelegt werden. Dabei ist der Vorsprung 2.3 nicht geschnitten dargestellt, sondern in einer Seitenansicht. Mit anderen Worten ist der Vorsprung 2.3 nicht umlaufend, sondern ist nur in einzelnen Abschnitten bzw. Teilkreissegmenten ausgebildet. Hierdurch kann das Abstützelement 9 am Vorsprung 2.3 vorbei geschoben werden, insbesondere in verschwenkter Ausrichtung, obgleich das Abstützelement 9 einen größeren Außendurchmesser aufweist als der von einer Innenseite des Vorsprungs 2.3 definierte Innendurchmesser. Das Abstützelement 9 kann dann zwischen der Ausbauchung 2.2 und dem Vorsprung 2.3 positioniert werden, insbesondere nachdem die Ventileinrichtung 10 und das Austauschelement 20 von oben auf das Kopflager 8 geschoben wurden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Insbesondere kann die Anordnung und Geometrie der Gegenlagerfläche des Austauschelementes von der gezeigten Variante abweichen, speziell in Abhängigkeit von der Geometrie des Abstützelementes. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Ventilanordnung
- 2: Luftfedertopf
- 2.1: Durchlass
- 2.2: Ausbauchung
- 2.3: Vorsprung
- 3: Rollbalg
- 4: Druckanschlagpuffer
- 5: Abrollkolben
- 6: Haltezylinder
- 7: Dichtelement
- 8: Kopflager bzw. schwingungsdämpfende Komponente des Kopflagers
- 9: Abstützelement

- 10: Ventileinrichtung, insbesondere Druckhalteventileinrichtung
- 10.1: Gehäuse
- 10.2: Oberflächenabschnitt, insbesondere Absatz
- 10.3: Aufnahme, insbesondere Nut, für Dichtelement
- 10a: Oberseite des Gehäuses
- 10b: Unterseite des Gehäuses
- 11: Abstützabschnitt, insbesondere Stützfläche
- 11.1: Innenradius bzw. Fase
- 12: Zentrierung
- 12.1: Außenradius bzw. Fase
- 13: Rippe bzw. Steg
- 14: Außenmantelfläche
- 15: stirnseitige Lagerfläche
- 15.1: Flächenabschnitt
- 16: Einlass bzw. Auslass

- 20: Austauschelement, insbesondere Austauschring
- 21: Auflagefläche
- 21.1: Innenradius bzw. Fase
- 22: Zentrierung bzw. Innenmantelfläche
- 24: Außenmantelfläche
- 25: Gegenlagerfläche
- 26: Außenradius bzw. Fase
- 27: Stirnfläche bzw. Stirnseite

- 30: Ventileinheit
- 40: Luftfederbein

- d14: Durchmesser der Außenmantelfläche der Ventileinrichtung
- d24: Durchmesser der Außenmantelfläche des Austauschelements

- M: Mittenlängsachse
- M1: Mittenlängsachse der Ventileinrichtung
- M2: Mittenlängsachse des Austauschelements
- V: Druckraum

- z20: Dicke des Austauschelements
- z20': Dicke des (weiteren) Austauschelements
- z20": Dicke des (weiteren) Austauschelements
- z25: vordefinierter Axialabstand; d.h. Axialposition der Gegenlagerfläche bzw. Abstand zwischen der Auflagefläche und der Gegenlagerfläche

## Patentansprüche

1. Ventileinrichtung (10) für ein Luftfederbein (40) eines Luftfederungssystems eines Kraftfahrzeugs, mit einer Ventileinheit (30) und einem die Ventileinheit (30) aufnehmenden Gehäuse (10.1), das eine Lagerfläche (15) zur Lagerung eines Kopflagers (8) des Luftfederbeins (40) an der Ventileinrichtung (10) aufweist, wobei das Gehäuse (10.1) einen Oberflächenabschnitt (10.2) zur formschlüssigen Abstützung der Ventileinrichtung (10) im Luftfederbein (40) aufweist, so dass eine vom Kopflager (8) auf die Ventileinrichtung (10) ausgeübte Kraft über das Gehäuse (10.1) in das Luftfederbein (40) einleitbar ist,
**dadurch gekennzeichnet, dass** an dem Oberflächenabschnitt (10.2) des Gehäuses (10.1) ein Abstützabschnitt (11) ausgebildet ist, an den ein vom Gehäuse (10.1) trennbares Austauschelement (20) aus der Richtung einer Mittenlängsachse (M1) der Ventileinrichtung (10) zur formschlüssigen Abstützung am Gehäuse (10.1) anordbar ist, wobei das Gehäuse (10.1) zumindest im Bereich des Oberflächenabschnitts (10.2) aus Kunststoff ausgeführt ist.

2. Ventileinrichtung (10) nach Anspruch 1, **dadurch gekennzeichnet, dass** das Gehäuse (10.1) eine Mehrzahl von Rippen (13) aufweist, welche aus Kunststoff ausgeführt sind und welche sich bevorzugt in radialer Richtung zwischen der Mittenlängsachse (M1) und dem Abstützabschnitt (11) erstrecken, und/oder welche bevorzugt gleichverteilt umlaufend um die Mittenlängsachse (M1) angeordnet sind.

3. Ventileinrichtung (10) nach einem der vorhergehenden Ansprüche, **dadurch gekennzeichnet, dass** der Abstützabschnitt (11) in einem radial äußeren Randbereich des Gehäuses (10.1) ausgebildet ist, bevorzugt angrenzend an eine Außenmantelfläche (24) des Gehäuses (10.1).

4. Ventileinrichtung (10) nach einem der vorhergehenden Ansprüche, **dadurch gekennzeichnet, dass** der Abstützabschnitt (11) an einer Oberseite (10a) des Gehäuses (10.1) angeordnet ist, die gegenüberliegend von der Lagerfläche (15) ausgebildet ist.

5. Ventileinrichtung (10) nach einem der vorhergehenden Ansprüche, **dadurch gekennzeichnet, dass** die Ventileinrichtung (10) das Austauschelement (20) aufweist, wobei der Abstützabschnitt (11) bevorzugt derart an einer Oberseite (10a) der Ventileinrichtung (10) ausgebildet ist, dass das Austauschelement (20) aus Richtung der Mittenlängsachse (M1) auf die Ventileinrichtung (10) aufsteckbar ist.

6. Ventileinrichtung (10) nach Anspruch 5, **dadurch gekennzeichnet, dass** das Austauschelement (20) eine mit dem Abstützabschnitt (11) korrespondierende Auflagefläche (21) aufweist und ringförmig ausgebildet ist.

7. Ventileinrichtung (10) nach Anspruch 6, **dadurch gekennzeichnet, dass** das Austauschelement (20) eine bevorzugt konkav ausgebildete Gegenlagerfläche (25) aufweist, über die das Austauschelement (20) im Luftfederbein formschlüssig abstützbar ist, wobei die Gegenlagerfläche (25) in einem vordefinierten Axialabstand (z25) von der Auflagefläche (21) angeordnet ist.

8. Ventileinrichtung (10) nach Anspruch 7, **dadurch gekennzeichnet, dass** der Abstützabschnitt (11) eine größere Fläche aufweist als die Gegenlagerfläche (25).

9. Luftfederbein (40) eines Luftfederungssystems für ein Kraftfahrzeug mit einer Ventileinrichtung (10) nach einem der vorhergehenden Ansprüche und mit einem Kopflager (8), **dadurch gekennzeichnet, dass** das Luftfederbein (40) ein Abstützelement (9) aufweist, über das eine formschlüssige Abstützung des Kopflagers (8) gebildet ist, wobei das Austauschelement (20) eine Kopplung zwischen dem Abstützelement (9) und dem Oberflächenabschnitt (10.2) am Gehäuse (10.1) der Ventileinrichtung (10) bildet.

10. Luftfederbein (40) nach Anspruch 9, **dadurch gekennzeichnet, dass** das Luftfederbein (40) einen Luftfedertopf (2) mit einer Ausbauchung (2.2) und einem Vorsprung (2.3) aufweist, wobei das Abstützelement (9) zwischen der Ausbauchung (2.2) und dem Vorsprung (2.3) angeordnet ist, und wobei das Austauschelement (20) am Abstützelement (9) in axialer Richtung gelagert ist.

## Claims

1. Valve device (10) for an air spring strut (40) of an air suspension system of a motor vehicle, having a valve unit (30) and a housing (10.1) which receives the valve unit (30) and has a bearing face (15) for mounting a head bearing (8) of the air spring strut (40) on the valve device (10), the housing (10.1) having a surface section (10.2) for supporting the valve device (10) in the air spring strut (40) in a positively locking manner, with the result that a force which is exerted by the head bearing (8) on the valve device (10) can be introduced via the housing (10.1) into the air spring strut (40),
**characterized in that** a supporting section (11) is configured on the surface section (10.2) of the housing (10.1), onto which supporting section (11) an exchange element (20) which can be disconnected from the housing (10.1) can be arranged from the direction of a center longitudinal axis (M1) of the valve device (10) for supporting on the housing (10.1) in a positively locking manner, the housing (10.1) being configured from plastic at least in the region of the surface section (10.2).

2. Valve device (10) according to Claim 1,
**characterized in that** the housing (10.1) has a plurality of ribs (13) which are configured from plastic and which preferably extend in the radial direction between the center longitudinal axis (M1) and the supporting section (11), and/or which are preferably arranged in a uniformly distributed circumferential manner about the center longitudinal axis (M1).

3. Valve device (10) according to either of the preceding claims, **characterized in that** the supporting section (11) is configured in a radially outer edge region of the housing (10.1), preferably in a manner which adjoins an outer circumferential face (24) of the housing (10.1).

4. Valve device (10) according to one of the preceding claims, **characterized in that** the supporting section (11) is arranged on an upper side (10a) of the housing (10.1), which upper side (10a) is configured so as to lie opposite the bearing face (15).

5. Valve device (10) according to one of the preceding claims, **characterized in that** the valve device (10) has the exchange element (20), the supporting section (11) preferably being configured on an upper side (10a) of the valve device (10) in such a way that the exchange element (20) can be plugged onto the valve device (10) from the direction of the center longitudinal axis (M1).

6. Valve device (10) according to Claim 5,
**characterized in that** the exchange element (20) has a supporting face (21) which corresponds with the supporting section (11), and is of annular configuration.

7. Valve device (10) according to Claim 6,
**characterized in that** the exchange element (20) has a preferably concavely configured counterbearing face (25), via which the exchange element (20) can be supported in the air spring strut in a positively locking manner, the counterbearing face (25) being arranged at a predefined axial spacing (z25) from the supporting face (21).

8. Valve device (10) according to Claim 7,
**characterized in that** the supporting section (11) has a greater area than the counterbearing face (25).

9. Air spring strut (40) of an air suspension system for a motor vehicle having a valve device (10) according to one of the preceding claims and having a head bearing (8), **characterized in that** the air spring strut (40) has a supporting element (9), via which a positively locking support of the head bearing (8) is formed, the exchange element (20) forming a coupling between the supporting element (9) and the surface section (10.2) on the housing (10.1) of the valve device (10).

10. Air spring strut (40) according to Claim 9,
**characterized in that** the air spring strut (40) has an air spring pot (2) with a bulge (2.2) and a projection (2.3), the supporting element (9) being arranged between the bulge (2.2) and the projection (2.3), and the exchange element (20) being mounted on the supporting element (9) in the axial direction.

## Revendications

1. Dispositif de valve (10) pour une jambe d'amortisseur pneumatique (40) d'un système de suspension pneumatique d'un véhicule automobile, avec une unité de valve (30) et un boîtier (10.1) contenant l'unité de valve (30), qui présente une face d'appui (15) pour le support d'un appui de tête (8) de la jambe d'amortisseur pneumatique (40) sur le dispositif de valve (10), dans lequel le boîtier (10.1) présente une partie de surface (10.2) pour l'appui par emboîtement du dispositif de valve (10) dans la jambe d'amortisseur pneumatique (40), de telle manière qu'une force exercée par l'appui de tête (8) sur le dispositif de valve (10) puisse être introduite dans la jambe d'amortisseur pneumatique (40) par l'intermédiaire du boîtier (10.1), **caractérisé en ce qu'**une partie d'appui (11) est formée sur la partie de surface (10.2) du boîtier (10.1), sur laquelle un élément remplaçable (20) séparable du boîtier (10.1) peut être disposé dans la direction d'un axe longitudinal central (M1) du dispositif de valve (10) en vue d'un appui par emboîtement sur le boîtier (10.1), dans lequel le boîtier (10.1) est réalisé en matière plastique au moins dans la région de la partie de surface (10.2).

2. Dispositif de valve (10) selon la revendication 1, **caractérisé en ce que** le boîtier (10.1) présente une multiplicité de nervures (13), qui sont réalisées en matière plastique et qui s'étendent de préférence en direction radiale entre l'axe central longitudinal (M1) et la partie d'appui (11), et/ou qui sont disposées de préférence avec une répartition uniforme de façon périphérique autour de l'axe central longitudinal (M1).

3. Dispositif de valve (10) selon l'une quelconque des revendications précédentes, **caractérisé en ce que** la partie d'appui (11) est formée dans une région de bord radialement extérieure du boîtier (10.1), de préférence adjacente à une surface latérale extérieure (24) du boîtier (10.1).

4. Dispositif de valve (10) selon l'une quelconque des revendications précédentes, **caractérisé en ce que** la partie d'appui (11) est disposée sur un côté supérieur (10a) du boîtier (10.1), qui est formé en face de la face d'appui (15).

5. Dispositif de valve (10) selon l'une quelconque des revendications précédentes, **caractérisé en ce que** le dispositif de valve (10) présente l'élément remplaçable (20), dans lequel la partie d'appui (11) est formée de préférence sur un côté supérieur (10a) du dispositif de valve (10), de telle manière que l'élément remplaçable (20) puisse être engagé sur le dispositif de valve (10) dans la direction de l'axe central longitudinal (M1).

6. Dispositif de valve (10) selon la revendication 5, **caractérisé en ce que** l'élément remplaçable (20) présente une face d'appui (21) correspondant à la partie d'appui (11) et est réalisé sous forme annulaire.

7. Dispositif de valve (10) selon la revendication 6, **caractérisé en ce que** l'élément remplaçable (20) présente une face d'appui opposée (25) de préférence de forme concave, par laquelle l'élément remplaçable (20) peut être appuyé par emboîtement dans la jambe d'amortisseur pneumatique, dans lequel la face d'appui opposée (25) est disposée à une distance axiale prédéfinie (z25) de la face d'appui (21).

8. Dispositif de valve (10) selon la revendication 7, **caractérisé en ce que** la partie d'appui (11) présente une plus grande surface que la face d'appui opposée (25).

9. Jambe d'amortisseur pneumatique (40) d'un système de suspension pneumatique pour un véhicule automobile avec un dispositif de valve (10) selon l'une quelconque des revendications précédentes et avec un appui de tête (8), **caractérisée en ce que** la jambe d'amortisseur pneumatique (40) présente un élément d'appui (9), par lequel un appui par emboîtement de l'appui de tête (8) est formé, dans laquelle l'élément remplaçable (20) forme un couplage entre l'élément d'appui (9) et la partie de surface (10.2) sur le boîtier (10.1) du dispositif de valve (10).

10. Jambe d'amortisseur pneumatique (40) selon la revendication 9, **caractérisée en ce que** la jambe d'amortisseur pneumatique (40) présente un pot d'amortisseur pneumatique (2) avec un renflement (2.2) et une saillie (2.3), dans laquelle l'élément d'appui (9) est disposé entre le renflement (2.2) et la saillie (2.3), et dans laquelle l'élément remplaçable (20) est monté en tant qu'élément d'appui (9) en direction axiale.
